# EUROPEAN PATENT APPLICATION

(11) **EP 3 456 180 A1**
(43) Date of publication of application: **20.03.2019**
(21) Application number: 17386029.7
(22) Date of filing: 13.09.2017
(51) Int. Cl.: A01G 13/02

(54) **PLASTIC FILM FOR AGRICULTURAL CULTIVATIONS WITH DIAPHARAGMATIC WEIGHT RETAINING POCKETS**

(71) Applicant: Daios, Asterios, 59200 Naoussa (GR)
(72) Inventor: Daios, Asterios, 59200 Naoussa (GR)
(74) Representative: Argyriadis, Korinna

(57) **Abstract**

The invention refers to a plastic film (1) with diaphragmatic weight retaining pockets (2) that can be used to cover agricultural cultivations such as low tunnels or linear cultivations. The plastic film (1) bears in its two longitudinal edges (3), consecutive diaphragmatic weight retaining pockets (2) formed by folding the plastic film (1) itself. The successive diaphragmatic weight pockets (2) are filled when using the plastic film with weight (4) - usually soil or sand - to hold the plastic film (1) firmly on the crop line. Each weight pocket (2) is configured in such a manner so that it is easy to insert soil or sand (4) from the weight inlet opening while at the same time retaining the weight and preventing its loss from the diaphragmatic weight retaining pockets (2) when using the plastic film.

## Description

The invention refers to a plastic film with diaphragmatic weight retaining pockets that can be used to cover agricultural cultivations such as low tunnels or linear cultivations. The plastic film bears on its two longitudinal edges, consecutive diaphragmatic weight retaining pockets. The successive diaphragmatic weight pockets are filled when using the plastic film with weight - usually soil or sand - to hold the plastic film firmly on the crop line. Each weight pocket is configured in such a manner so that it is easy to insert soil or sand from the weight insertion opening while at the same time retaining the weight and preventing its loss from the diaphragmatic weight retaining pockets when using the plastic film.

Linear crop coverage in low tunnels, beds or ridges has been particularly developed in recent decades. The state of the art consists of plastic films with weight insertion pockets along the two edges of the plastic film, however the majority of the solutions either show loss of weight from the pockets to the environment when using the plastic film, or the complexity of their construction does not allow their commercialisation. In cases where use of water as a weight in the plastic film pockets has been proposed, it has been commonly found that water is lost from the pockets when using the plastic film, since the slightest hole or tear that can be caused during use, leads to weight being lost from the pockets.

The formation of the pockets is usually accomplished by folding the longitudinal edges of the plastic film and creating in the folded parts, successive pockets which in their use are filled with weight. The filling is achieved from the opening of each pocket. In all the hitherto proposed solutions in the use of the plastic film the weight is gradually emptied from the weight pockets through the weight insertion, opening. Therefore, in the case of windy conditions the covered space is revealed due to lack of weight in the pockets which results in temperature loss and ultimately reduced and qualitatively degraded yields, forcing the user, in order to avoid this complication, to refill the pockets with as much soil or sand has been lost from them during the use of the film. This process has to be done frequently and often in the same growing season, which increases the labour cost and hence the overall cost of cultivation.

Various solutions have been suggested in the past by the same inventor as well as by others for plastic film with special weight-retaining pockets using as weight soil, sand, water or a combination of them.

With the patents DE29500393U1 and DE29707670U1 various solutions were proposed for a plastic film with weight insertion pockets along its sides.

With the invention, GR 1002872 (B) a plastic film has been described with insertion pockets that bear water as a weight. Folding the plastic film itself, a feed tube and a plurality of independent water pockets fed from said feed tube are formed.

With the invention, GR 2000100385 (A), independent water tubes are introduced into folds along the edges of the plastic sheet.

WO 0062597 (A1) combines the formation of water pockets with overlying soil or sand intake pockets.

These solutions require the installation and use of water supplies to ensure the filling of the pockets seamlessly, which is only possible in a small number of fields.

WO 2004019674 (A1) has attempted to reduce the cost of filling the pockets by forming the special retaining pockets in such a way as to facilitate the introduction of soil and rainwater.

A further invention is EP 2071939 (A1), which has alternating special soil and water retainers utilizing rainwater.

GR 20030100373 (A) has attempted to solve the problem by folding each end of the plastic sheet two successive times to form successive soil insertion pockets having a rim on the initial edge of the plastic sheet which prevents the loss of weight from the pockets.

In all the above cases, weight loss during use is significant and unavoidable, leading to the need to refill the pockets during the use of the plastic film thereby increasing the operating cost.

Patent DE 102012024694 refers to a plastic film with weight pockets that bears an additional film stripe that hinders the loss of weight, however in practical application the lip formed cannot be directed so that it practically seals the weight insertion opening.

Patent WO-A-2016/178036 A1 by the present inventor has put forward an effective proposal to solve the issue of weight loss from the pockets along the sides of the plastic film. However, the production process is complex and as a result significantly increases the cost of production and the handling of the product.

The present invention proposes a novel way of constructing soil retaining pockets at the longitudinal edges of a plastic cover film of agricultural cultivations and particularly diaphragmatic pockets.

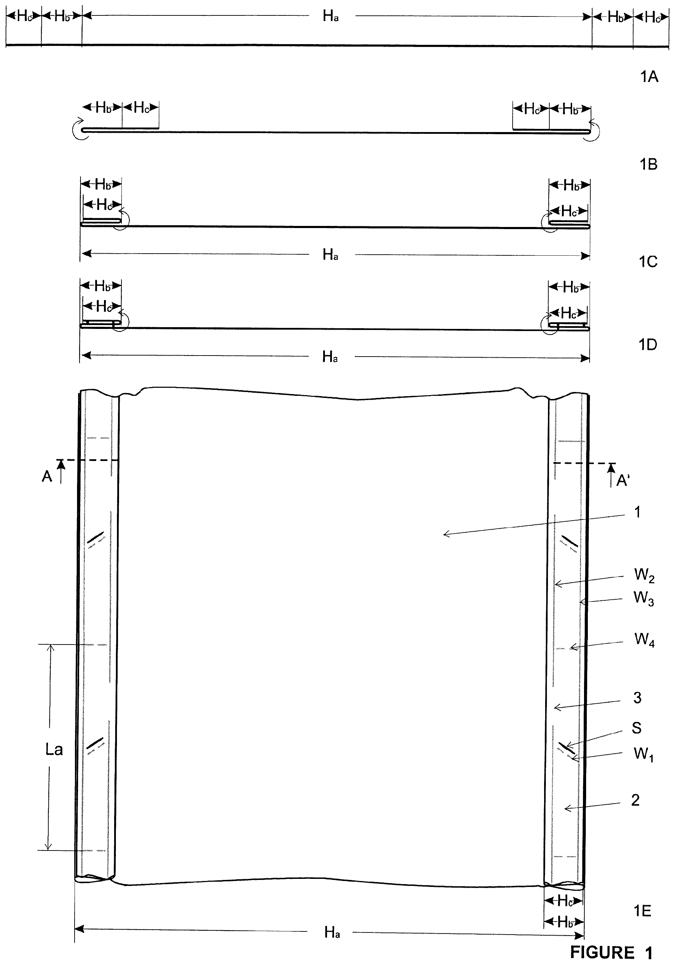

According to the current invention, diaphragmatic soil pockets are formed by creating a pocket that bears a weight insertion chamber, one or more weight retention chambers and a diaphragm that separates the weight insertion and weight retention chambers. The distinct chambers can be formed in several ways for example by folding each longitudinal edge of a plastic film twice - either towards the opposite direction (Z type) or both foldings to the same direction (C type) - to form a double folding and by welding them together longitudinally to form two overlapping tubular chambers. These chambers are periodically transversely welded to create repetitive longitudinal weight retaining pockets. Each pocket consists of longitudinally overlapping portions of the tubular shaped chambers. The two chambers in each pocket communicate through a transverse or sloping slit, or more than one slits, on the sandwiched/intermediate part of the plastic film that is termed the diaphragm. The slits can be of any size and shape. While in use, the soil is inserted into each pocket from the weight insertion opening in the chamber that is between the main plastic sheet and the diaphragm and through the transverse or sloping slit located on the diaphragm moves into the second chamber where it is trapped and thus any soil losses from the pocket are avoided when using the plastic film (Figures 1 to 6).

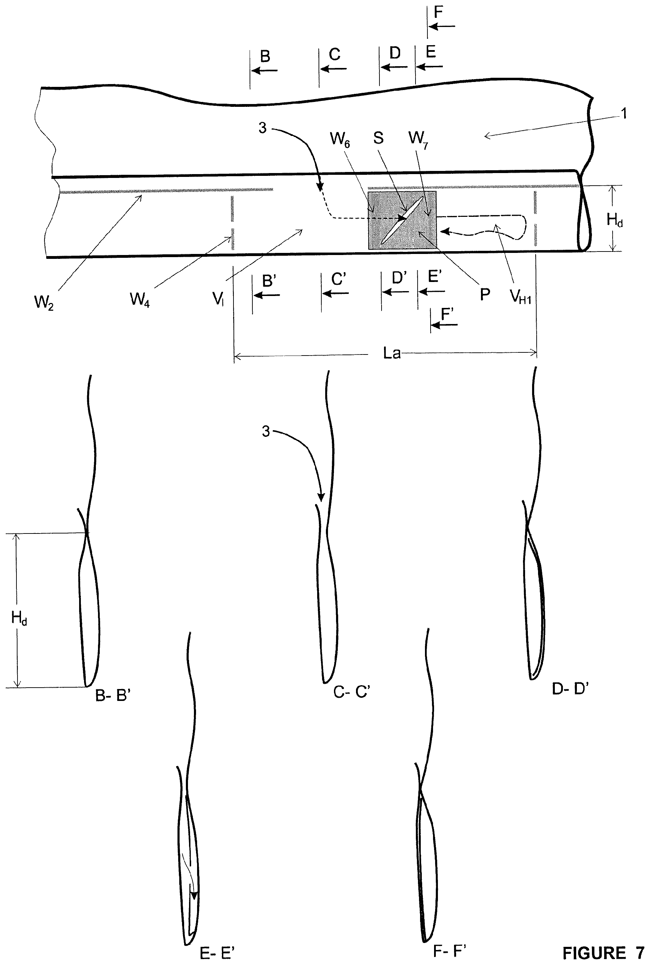

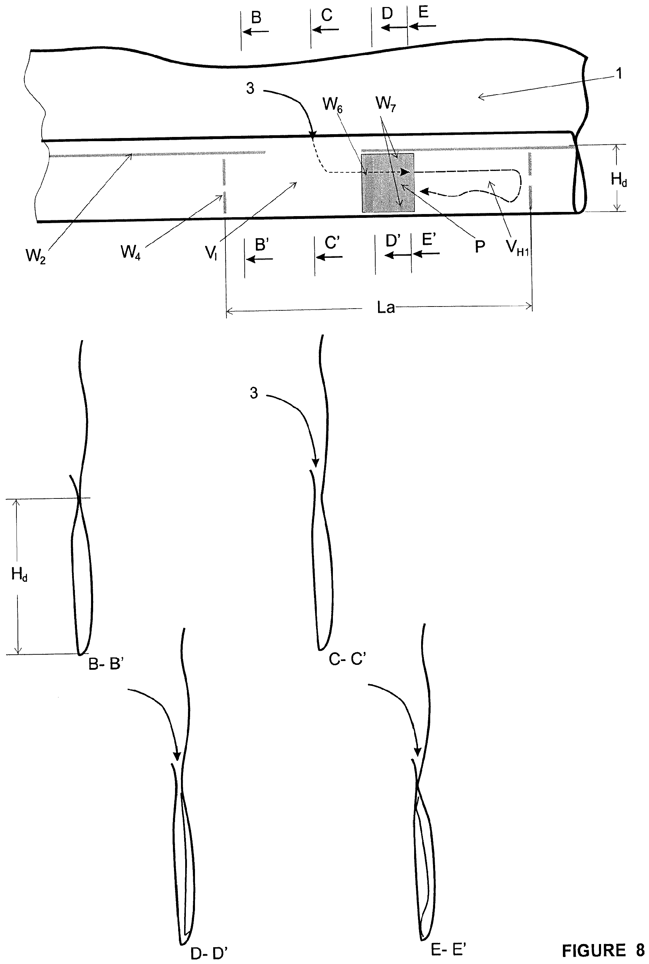

The diaphragm could also be created by welding a patch that bears an opening such as a slit (Figure 7) or that the opening is formed between welds at the end of the length of the patch (Figure 8). The side of the patch closer to the weight insertion opening is welded on the main body of the plastic film whereas the end of the patch farthest of the weight insertion opening is welded with spot welds of any shape and form to the folded part of the film.

Below Figures and references to them that describe the invention.
- Figure 1:: Plastic Film for agricultural cultivations with diaphragmatic weight retaining pockets (1) where the foldings B and C are depicted to width H_{B} and H_{C} respectively and total final width H_{A}. The overlapping of the sections B and C preferably across their total width (H_{B} ∼ H_{C}) is also to be seen. The Z type folding and the process of achieving said folding are both clearly depicted.

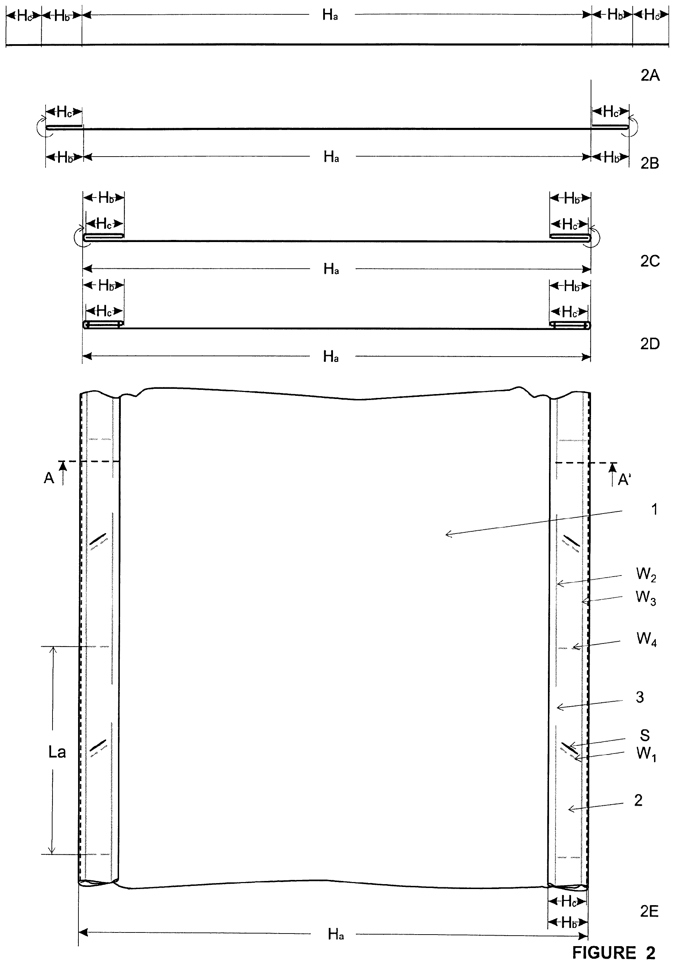

- Figure 2:: Plastic Film for agricultural cultivations with diaphragmatic weight retaining pockets (1) where the foldings B and C are depicted to width H_{B} and H_{C} respectively and total final width H_{A}. The overlapping of the sections B and C preferably across their total width (H_{B} ∼ H_{C}) is also to be seen. The double C type folding and the process of achieving said folding are both clearly depicted.

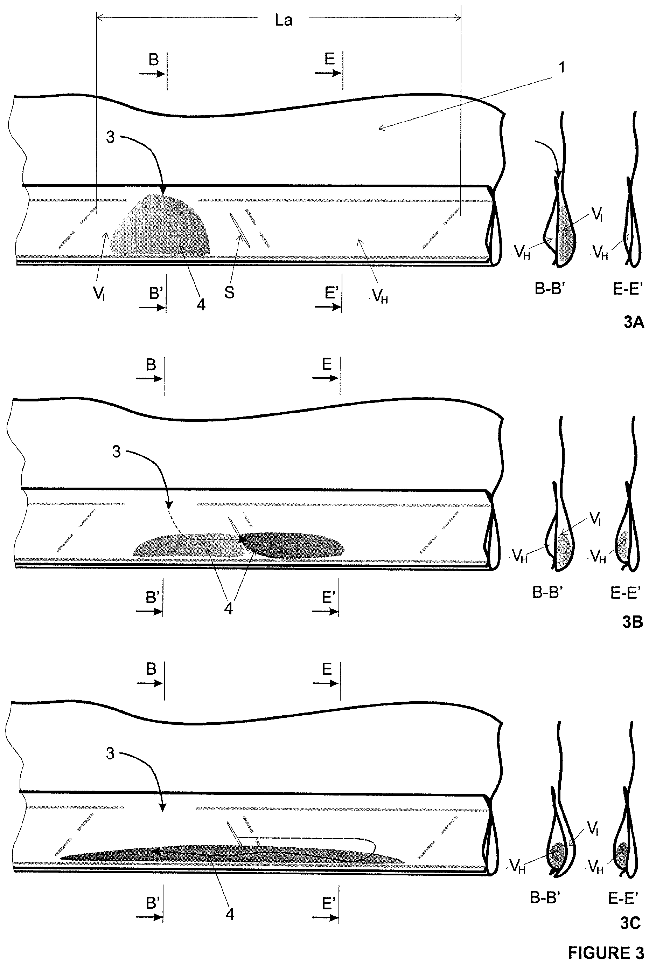

- Figure 3:: Plastic Film for agricultural cultivations with diaphragmatic weight retaining pockets (1) where the movement of sand or soil is schematically presented. Weight is inserted through the opening to the weight insertion chamber V_{I}, passes through the Slit S and enters the weight retaining chamber V_{H}. Respective cross-sections depict the movement of soil and the function of the diaphragm.

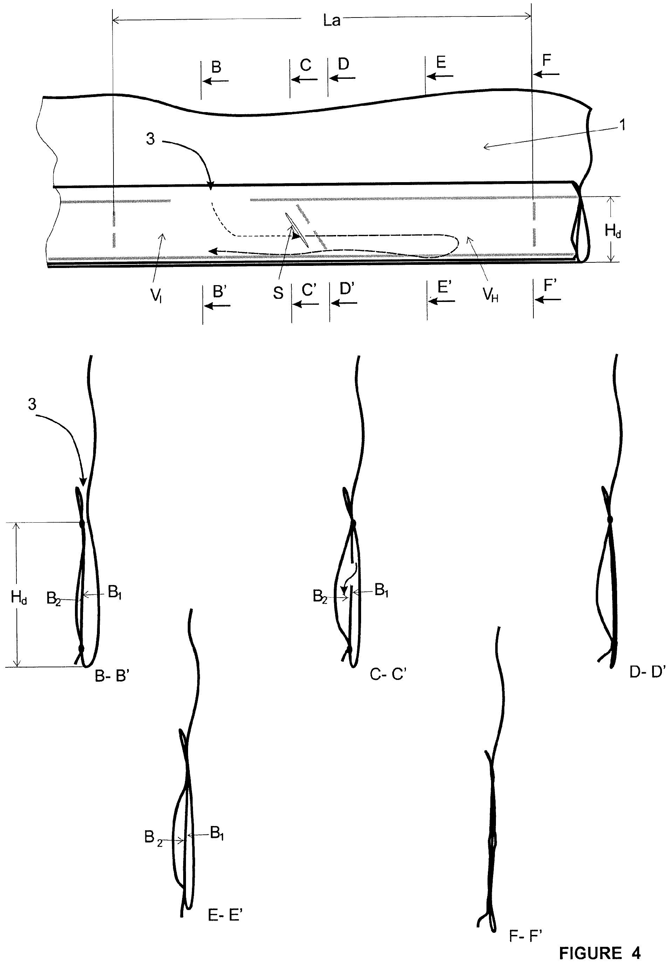

- Figure 4:: Plastic Film for agricultural cultivations with diaphragmatic weight retaining pockets (1) where several cross sections of the chambers are depicted showing the diaphragm and the formations that facilitate weight retention in the chambers. In detail, cross section B-B' shows the weight insertion opening. Cross section C-C' shows the opening on the diaphragm. Cross Section D-D' depicts the welding W₁ of the diaphragm on the main body of the plastic film. Cross section E-E' shows the weight insertion chamber and the weight retaining chamber separated with the diaphragm and finally cross section F-F' depicts welding W₄ that welds all three sections together.

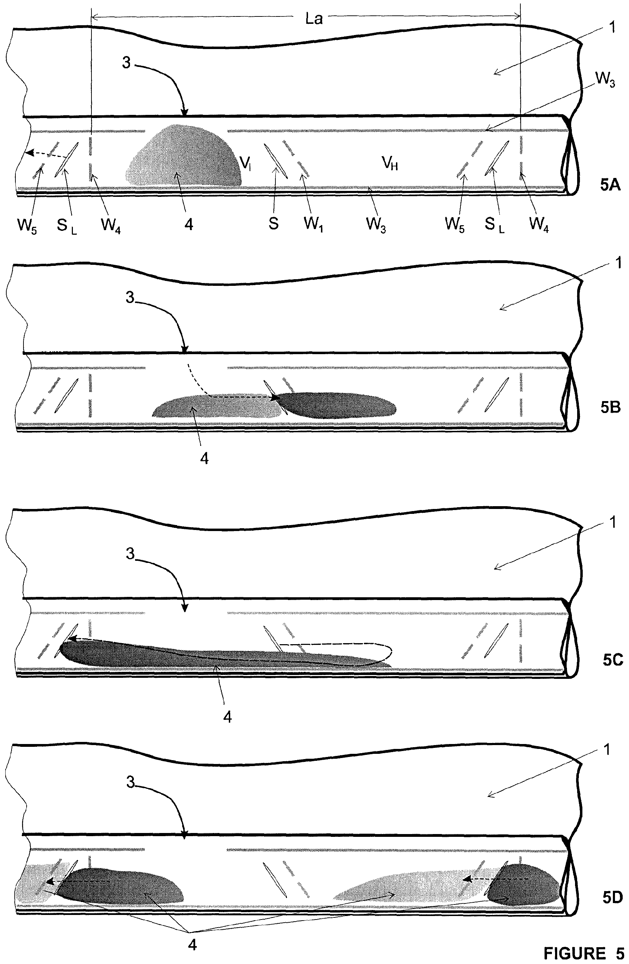

- Figure 5:: Plastic Film for agricultural cultivations with diaphragmatic weight retaining pockets (1). The figure presents third embodiment of the invention where two weight retaining chambers are present. The movement of sand or soil is schematically presented. Namely, weight is inserted through the opening (Figure 5A) to the weight insertion chamber V_{I}, passes through the Slit S and enters the weight retaining chamber V_{H}. It then goes through Slit S_{L} and enters the second weight retaining chamber V_{H2}.

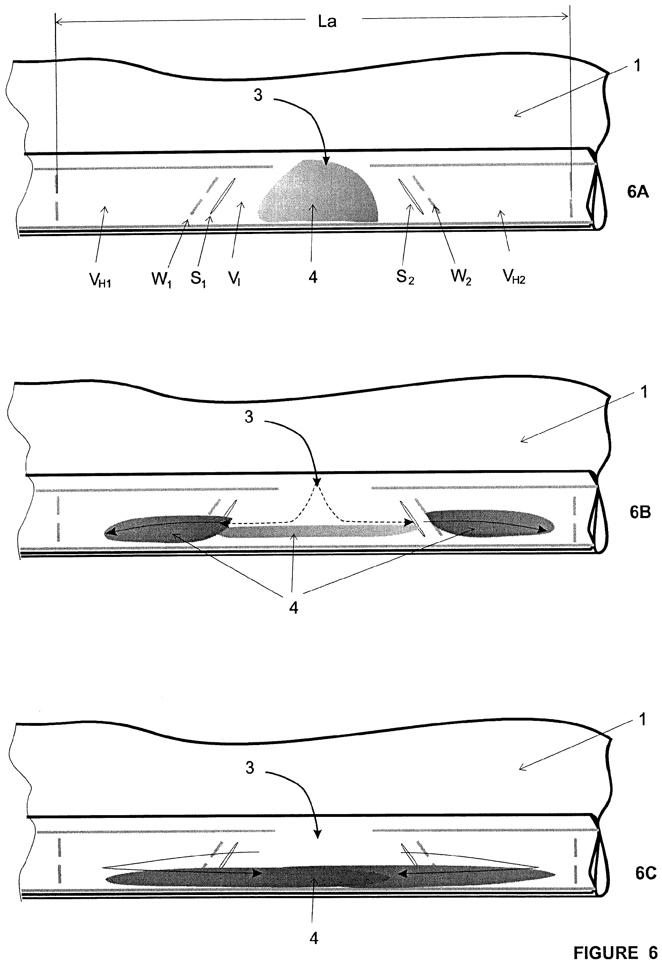

- Figure 6:: Plastic Film for agricultural cultivations with diaphragmatic weight retaining pockets (1) where the weight insertion opening and respectively the weight insertion chamber V_{I} is located in the middle of the overall pocket and bears symmetrically to the weight insertion opening slits and weldings in such a manner for that two symmetrical or asymmetrical openings are formed on the diaphragm B, through which weight can be transferred from the weight insertion chamber to the weight retention chamber V_{H}. In this case, there could be slits S_{L} and weldings W₅ respectively through which Slits symmetrical or asymmetrical openings are formed from Chamber V_{I} to chambers V_{H1} and V_{H2}
- Figure 7:: Plastic Film for agricultural cultivations with diaphragmatic weight retaining pockets (1) that is formed by folding both edges once towards the centre of the plastic film that bears a patch that functions as the diaphragm separating the weight insertion chamber and the weight retention chamber. Said diaphragm can bear slits S so that there is an opening through which soil or sand can flow from the weight insertion chamber to the weight retention chamber and is welded on the main body of the plastic film with weld W₆ whereas the other end is welded on the folded part of the film W₇.
- Figure 8:: Plastic Film for agricultural cultivations with diaphragmatic weight retaining pockets (1) that is formed by folding both edges once towards the centre of the plastic film that bears a patch that functions as the diaphragm separating the weight insertion chamber and the weight retention chamber. Said diaphragm is welded on the main body of the plastic film with weld W₆ close to the weight insertion opening. The other end of the patch is welded on the folded part of the film with partial weld W₇ in such a manner that there is an opening through which soil or sand can flow from the weight insertion chamber to the weight retention chamber.

According to the first embodiment of the invention the plastic film (Figure 1) is produced employing a polyolefin (LDPE, LLDPE, EVA etc.) or a combination thereof. The plastic film can be of any length (L) and width (H_{A}+2H_{B}+2H_{C}), and it can be produced employing any known process such as blown film or cast film extrusion as a monolayer or multilayer structure and it can incorporate any additive that would provide the desired thermal, optical and mechanical properties.

Following step is to make repeated Slits of any shape and form on section (B) with a step L . Every Slit (S) is transverse or preferably inclined to an angle wider than 0° degreed and less than 180° in relation to the longitudinal axis. The following step is to fold both longitudinal edges (3) to a width (H_{B} + H_{C}) up to 30 cm and preferably 15-20 cm so that the plastic film has final width (H_{A}). It is worth noting that Slit S could be also performed after the folding of the edges. Weldings W₁, are consecutively performed of the section (B) on to the main body of said film (A) with a linear, sectional or dotted welding or a welding of any form to the right-hand side of the Slit in relation to the transverse axis and looking at the Slit (S) from the side at which the folded section in on top of the main body of the plastic film (A). Section (B) plays an instrumental role in the formation of the pockets as it constitutes the diaphragm that separates the two formed chambers.

A second folding (C) follows to the width H_{C} however this time to the opposite direction in relation to the longitudinal axis of the plastic film so that sections B and C overlap. Preferably width (H_{B}) of section B is the same as width (H_{C}) of the section C so that the two sections overlap to their full width.

The overlapping folded sections are welded to the main body of the plastic film (A) with following weldings: Welding (W₁) that is located next to Slit S and welds Section B onto the main body of the plastic film A. Welding (W₂) so that the furthest point in relation to the longitudinal axis namely, to a small distance from it (x) the three overlapping sections are welded hermetically and preferably with a linear continuous welding. Welding (W₃) at the closest point of the overlapping sections in relation to the longitudinal axis, the three overlapping sections are welded with a preferably linear non-continuous welding so that weight insertion openings are formed. Between the two weldings (W₂) κα 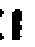 (W₃) repeated weldings (W₄) of any shape and size are performed, sectional, partial or dotted, transverse in relation to the longitudinal axis of the plastic film, with an angle equal or wider than 0° degrees and less than 180° in relation to the transverse axis so that the three overlapping sections at the edges (A, B & C) are welded forming repeated and consecutive diaphragmatic weight retaining pockets of any length. Every such pocket bears following elements consisting of slits, foldings and weldings: a) the soil or sand insertion chamber (V_{I}), b) the Slit (S) on the diaphragm B through which the weight is transferred from the weight insertion chamber (V_{I}) to the weight retaining chamber (V_{H}), c) the welding (W₁) of the diaphragm on the main body of the plastic film (A), that holds the diaphragm at the point next to the Slit onto the main body of the plastic film (A) so that with the insertion of soil or sand in the weight insertion chamber, the part of the diaphragm before the Slit would be distancing itself from the main body of the plastic film (A) while the part of the diaphragm to the right of Welding W₁ would remain at its position. In this manner, the slit opens as soil or sand move from the weight insertion chamber (V_{I}) to the weight retention chamber (V_{H}). Weight in the retaining chamber can move to such position that it presses the surface (B₂) of the diaphragm so that the surface (B₁) of said diaphragm would close the weight insertion chamber. Movement of weight towards the opposite direction does not favour the opening of the slit as pressure is applied on surface (B₁) of the diaphragm hence there is not a mechanism that would lead the parts on either side of the slit and the welding (W₁) to move to opposite directions so that the slit can open again and allow the flow of soil or sand to the weight insertion chamber (V_{I}) that would eventually lead to its loss.

According to the second embodiment of the invention (Figure 2) a plastic film (1) is produced employing a polyolefin (LDPE, LLDPE, EVA etc.) or a combination thereof. The following step is to make repeated Slits (S) of any shape and form on section (C) with a step L. Every Slit (S) is transverse or preferably inclined to an angle wider than 0° degreed and less than 180° in relation to the longitudinal axis. The following step is to fold both longitudinal edges (3) to a width (H_{C}) up to 20 cm and preferably 12 cm so that the plastic film has final width (H_{A}+2H_{B}). It is worth noting that Slit S could be also performed after the folding of the edges. (A) second folding is performed to width H_{B} that is preferably equal to (H_{C}) hence the double folded section however welding only section (C) on to the main body of said film (A). This can be achieved by having materials with different melting points on sections B and C, between the two sections or by employing materials that are anisotropic. Welding (W₁) is a linear, sectional or dotted welding or a welding of any form to the right-hand side of the Slit in relation to the transverse axis and looking at the Slit (S) from the side at which the folded section in on top of the main body of the plastic film (A). Section (C) plays an instrumental role in the formation of the pockets as it constitutes the diaphragm that separates the two formed chambers. The overlapping folded sections are welded to the main body of the plastic film (A) with following weldings: Welding (W₁) that is located next to Slit (S) and welds Section (C) onto the main body of the plastic film (A). Welding (W₂) so that the furthest point in relation to the longitudinal axis namely, to a small distance from it (x) the three overlapping sections are welded hermetically and preferably with a linear continuous welding. It is important to note that Welding (W₂) could be omitted in this embodiment of the invention if enough pressure is applied on the edges of the film so that a crease is formed. Welding (W₃) at the closest point of the overlapping sections in relation to the longitudinal axis, the three overlapping sections are welded with a preferably linear non-continuous welding so that weight insertion openings are formed. Between the two weldings (W₂) κα 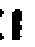 (W₃) repeated weldings (W₄) of any shape and size are performed, sectional, partial or dotted, transverse in relation to the longitudinal axis of the plastic film, with an angle equal or wider than 0° degrees and less than 180° in relation to the transverse axis so that the three overlapping sections at the edges (A, B & C) are welded forming repeated and consecutive diaphragmatic weight retaining pockets of any length

Every pocket bears the following elements formed by the slits, foldings and weldings: a) The soil or sand insertion chamber (V_{I}), b) the Slit (S) on the diaphragm C through which weight can be transferred from the weight insertion chamber to the weight retaining chamber (V_{H}), c) the welding W₁ of the diaphragm C on the main body of the plastic film (A), d) the welding W₄ that welds the diaphragm C on the main body of the plastic film (A).

Alternatively in both above embodiments, there could be more than one Slit, namely Sᵢ, Sⱼ,.... The slits can be parallel or they can have any inclination among them in relation to the transverse axis of the film between 0° and 180°. Despite the fact that multiple slits are performed, only a welding W₁ could be performed to the right or further right from the Slit Sᵢ in relation to the transverse axis of the film and looking at the Slit Sᵢ from the side that the folded sections are on top of the main body of the plastic film (A).

According to the third embodiment of the invention (Figure 5) all processes as described for the first or the second embodiment of the invention are performed with the addition of having a second slit (S_{L}) and a fifth welding (W₅) located next to it at a step µ on the same section as Slit (S) and Welding (W₁). The second slit allows access for the weight to the second weight retaining chamber V_{H1} and V_{H2} that is naturally formed between Section (B) and the main body of the plastic film (A). W₅ functions at the exact same fashion as (W₁) however at the opposite direction. The same can be employed in case the foldings and slits are performed as described in the second embodiment of the invention.

According to the fourth embodiment of the invention (Figure 6) the weight insertion opening and the weight insertion chamber V_{I} respectively are located in the middle of the pocket and bear symmetrical or asymmetrical as to the weight insertion opening of the pocket, slits and weldings that allow the formation of two symmetrical or asymmetrical openings on the diaphragm B through which the weight is transferred from the weight insertion chamber V_{I} to the weight retaining chamber V_{H}. In this case, there could be Slits S_{L} and weldings W₅ through which symmetrical or asymmetrical openings from the first weight retaining chamber V_{H} to chambers V_{H2}.

According to the fifth embodiment of the invention (Figure 7) the diaphragm can be formed by welding an additional film in the form of a stripe or a patch of the same width as the folding of the sides of the main body of the film, of the same or different thickness to the main body of the film. The film would bear the slit and would be welded so that a weight insertion chamber V_{I} is formed between the welded stripe or patch and the main body of the film. Once the stripe or patch is welded on the main body of the film a folding of the sides of the main body of the film follows so that the chambers that are separate by the diaphragm are formed. The weight would then move from the weight insertion chamber to the weight retaining chamber through the slit that is located on the stripe or the patch leading to its retention in the formed pocket.

According to the sixth embodiment of the invention (Figure 8) the diaphragm can be formed by welding an additional film in the form of a stripe or a patch of the same width as the folding of the sides of the main body of the film, of the same or different thickness to the main body of the film. The film is welded so that there is a transverse weld between the end of the patch that is located closer to the weight insertion opening and a partial weld of the other end of the patch to the folded part of the film only so the partial weld functions as an opening through which soil or sand moves from the weight insertion chamber to the weight retention chamber.

In all above embodiments, the slits could have such a form that a flap is created so that it further assists with weight retention in the weight retention chambers.

It is important to note that for all above embodiments of the invention one side of the plastic film is the mirror image of the other side in relation to the longitudinal axis of the film. Respectively the mirror image of the film in relation to the transverse axis would function in exactly the same manner however towards the opposite direction.

## Claims

1. Plastic film for agricultural cultivations with diaphragmatic weight retaining pockets of any length (L) and Width (H) that bears along its both lengthways edges (3) consecutive diaphragmatic weight retaining pockets (2) each of them of length (La) and width (Hb) - of any shape and form and - that is **characterised by** the fact that every consecutive pocket consists of three distinct parts:
a) A weight insertion chamber V_{I}
b) Diaphragm that separates the weight insertion chamber V_{I} from the weight retention chamber V_{H} that bears an opening of any form and shape through which weight is transferred from the weight insertion V_{I} chamber to the weight retention chamber V_{H}
c) Weight retention chamber V_{H} preferably larger than the weight insertion chamber V_{I} so that the weight that is inserted in the weight insertion chamber is transferred through the opening on the diaphragm to the weight retaining chamber in its entirety,
so that weight retention is achieved in the pockets of the plastic film and consequently the loss of weight from the pockets is avoided.

2. Plastic film for agricultural cultivations with diaphragmatic weight retaining pockets according to claim 1 that is **characterised by** the fact that the pockets are formed by folding the sides of the film (originally of width Ha+2Hb+2Hc) twice at every side, once towards the centre of the plastic film to width H_{B} + H_{C} followed by folding the film to the opposite direction to width σε Hc where preferably Hb = Hc (Figure 1) so that two longitudinal overlapping tubes are formed which define consecutive pockets of length La and width Hd ≤ H_{B} or Hc among two consecutive transverse weldings (W₄) of any inclination, a continuous linear welding (W₃) and a non-continuous linear welding (W₂) and every pocket bears a weight insertion chamber V_{I} and a weight retention chamber V_{H} (Figures 1 and 3) through a diaphragm that is formed by a slit (S) on section H_{B}, preferrably inclined, and a welding (W₁) preferrably inclined, that welds the section H_{B} to the main body of the plastic film that is located preferrably at the lenghtways mid point of the pocket.

3. Plastic film for agricultural cultivations with diaphragmatic weight retaining pockets according to claim 1 that is **characterised by** the fact that the pockets are formed by folding the sides of the film (originally of width Ha+2Hb+2Hc) twice at every side, once towards the centre of the plastic film to width Hc followed by folding the film to the same direction to width where preferrably Hb = Hc (Figure 2) so that two longitudinal overlapping tubes are formed which define consecutive pockets of length La and width Hd ≤ H_{B} or Hc among two consecutive transverse weldings (W₄) of any inclination, a continuous linear welding (W₃) and a non-continuous linear welding (W₂) and every pocket bears a weight insertion chamber V_{I} and a weight retaining chamber V_{H} through a diaphragm that is formed by a slit (S) on section H_{B}, preferrably inclined, and a welding (W₁) preferrably inclined, that welds the section H_{C} to the main body of the plastic film that is located preferrably at the lenghtways mid point of the pocket.

4. Plastic film for agricultural cultivations with diaphragmatic weight retaining pockets according to claim 1 that is **characterised by** the fact that the pockets are formed by folding the sides of the film (originally of width Ha+2Hb) only once towards the centre of the film (Figure 7) to width H_{B} so that simple tubes are formed which define consecutive pockets of length La and width Hd ≤ H_{B} among two consecutive transverse weldings (W₄) of any inclination, a non-continuous linear welding (W₂) and pockets bear a weight insertion chamber V_{I} and a weight retaining chamber V_{H} through a diaphragm is formed by welding an additional stripe or patch (P) of any shape and size preferably of the same width as the final width (Hd) of the pocket, said stripe or patch having same or different thickness and the same or different materials and structure and bears a slit or slits (S) and transverse weldings that one (W₆) welds the stripe to the main body of the film and the other (W₇) welds the stripe to the folding part Hb and is preferrably located at the lenghtways mid section of the pocket.

5. Plastic film for agricultural cultivations with diaphragmatic weight retaining pockets according to claim 1 that is **characterised by** the fact that the pockets are formed by folding the sides of the film (originally of width Ha+2Hb) only once towards the centre of the film (Figure 8) to width H_{B} so that simple tubes are formed which define consecutive pockets of length La and width Hd ≤ H_{B} among two consecutive transverse weldings (W₄) of any inclination, a non-continuous linear welding (W₂) and pockets bear a weight insertion chamber V_{I} and a weight retaining chamber V_{H} through a diaphragm that is formed by welding an additional stripe or patch (P) of any shape and size preferably of the same width as the final width of the pocket, said stripe or patch (P) having same or different thickness and the same or different materials and structure and is welded to the main body of the plastic film with a transverse welding (W₆) and the folding part Hb with a transverse spot welding (W₇) of any form.

6. Plastic film for agricultural cultivations with diaphragmatic weight retaining pockets according to claims 1 and 2 or 3 or 4 or 5 that is **characterised by** the fact that in each pocket (2) or at selected pockets (2) there is a second diaphragm symetrically or asymmetrically as to the weight insertion opening (3) at the weight insertion chamber V_{I} so that a second symmetrical on asymetrical weight retention chamber is formed V_{H2}.

7. Plastic film for agricultural cultivations with diaphragmatic weight retaining pockets according to claim 1 and 2 or 3 that is **characterised by** the fact that the slits S and S_{L} are formed in such a manner that a flap or numerous flaps are formed that hinder the flow of soil or sand from the weight retaining chamber V_{H} or the weight retaining chambers V_{H} and V_{H2} to the weight insertion chamber and thus out of the pockets.

8. Plastic film for agricultural cultivations with diaphragmatic weight retaining pockets according to claim 1 and 2 or 3 or 1 and 4 or 5 that is **characterised by** the fact that the positions of the openings (3) through which the soil or sand (4) enters the weight insertion chambers and consequently the position of the consecutive openings are located in the middle of the formed and in every pocket there are respectively there are slits and weldings that form for every weight insertion chamber two symmetrical points (Figure 6) in relation to the mid of the opening through which the soil or sand is transferred from the weight insertion chamber V_{I} to the weight retaining chamber V_{H}.

9. Plastic film for agricultural cultivations with diaphragmatic weight retaining pockets according to claim 1 and/or 2 to 7 that is **characterised by** the fact that the film could be on non-uniform thickness so that when folded the overlapping parts of the film will add to a total thickness at the edges that will be less than if the sides were of the same thickness of the main body.
